# EUROPEAN PATENT APPLICATION

(11) **EP 4 360 739 A1**
(43) Date of publication of application: **01.05.2024**
(21) Application number: 23784678.7
(22) Date of filing: 28.03.2023
(51) Int. Cl.: B01D 53/04, B01D 53/14, C01B 32/50

(54) **REGENERATION METHOD FOR ACID-GAS ADSORPTION DEVICE, AND MANUFACTURING METHOD FOR ACID-GAS ADSORPTION DEVICE**

(30) Priority: 07.04.2022 JP 2022064097; 30.11.2022 JP 2022190911
(71) Applicant: NGK Insulators, Ltd., Nagoya-shi, Aichi 467-8530 (JP)
(72) Inventor: OKUMA, Yusuke, Nagoya-shi, Aichi 467-8530 (JP); SHIBAGAKI, Yukinari, Nagoya-shi, Aichi 467-8530 (JP); KAN, Hirofumi, Nagoya-shi, Aichi 467-8530 (JP); IIDA, Kazuki, Nagoya-shi, Aichi 467-8530 (JP); TORII, Atsushi, Nagoya-shi, Aichi 467-8530 (JP); NAKAGAWA, Kosuke, Nagoya-shi, Aichi 467-8530 (JP)
(74) Representative: Müller-Boré & Partner Patentanwälte PartG mbB
(86) International application number: PCT/JP2023/012499
(87) International publication number: WO 2023/195388

(57) **Abstract**

Provided are a method of regenerating an acid gas adsorption device capable of smoothly recovering acid gas capture performance and achieving a reduction in running cost, and a method of producing an acid gas adsorption device capable of producing an acid gas adsorption device having excellent acid gas capture performance. The method of regenerating an acid gas adsorption device according to an embodiment of the present invention includes the steps of: causing an acid gas to be adsorbed to an acid gas adsorption material by supplying a gas including the acid gas to an acid gas adsorption device so that the gas is brought into contact with an acid gas adsorption layer; causing the acid gas to be desorbed from the acid gas adsorption material; removing the acid gas adsorption layer of the acid gas adsorption device, which has been subjected to the step of causing the acid gas to be adsorbed and the step of causing the acid gas to be desorbed, from a surface of a base material; and forming an acid gas adsorption layer including a porous carrier and an acid gas adsorption material on the surface of the base material from which the acid gas adsorption layer has been removed.

## Description

### Technical Field

The present invention relates to a method of regenerating an acid gas adsorption device and a method of producing an acid gas adsorption device.

### Background Art

In recent years, an attempt has been made to separate and capture an acid gas in the atmosphere in order to reduce an environmental load. Such acid gas is, for example, carbon dioxide (hereinafter sometimes referred to as "CO₂"), which is a main cause of global warming. As a typical example of such attempt, a Carbon dioxide Capture, Utilization and Storage (CCUS) cycle has been known. As a carbon dioxide adsorption device to be used for such separation and capture of carbon dioxide, there has been proposed an absorbent structure for CO₂ capture including: a honeycomb substrate having a plurality of partition walls thereby forming a plurality of flow channels; and a functional mer group positioned in and on the partition walls (see, for example, Patent Literature 1). With such absorbent structure for CO₂ capture, CO₂ can be captured from a gas fluid flowing in the absorbent structure, and CO₂ having been captured can be desorbed therefrom under predetermined conditions. However, when CO₂ in the atmosphere is repeatedly adsorbed and desorbed with the absorbent structure for CO₂ capture described in Patent Literature 1, a CO₂ capture rate may be gradually reduced owing to impurities in the atmosphere and repetition of heat treatment. In this case, it is required that the entirety of the absorbent structure for CO₂ capture be replaced, resulting in a problem of an increase in running cost.

### Citation List

### Patent Literature

[PTL 1] WO 2013/119929 A1

### Summary of Invention

### Technical Problem

A primary object of the present invention is to provide a method of regenerating an acid gas adsorption device capable of smoothly recovering acid gas capture performance and achieving a reduction in running cost, and a method of producing an acid gas adsorption device capable of producing an acid gas adsorption device having excellent acid gas capture performance.

### Solution to Problem

[1] A method of regenerating an acid gas adsorption device according to one embodiment of the present invention includes the steps of: causing an acid gas to be adsorbed to an acid gas adsorption material by supplying a gas including the acid gas to an acid gas adsorption device including a base material, and an acid gas adsorption layer arranged on a surface of the base material, the acid gas adsorption layer including a porous carrier and the acid gas adsorption material, so that the gas is brought into contact with the acid gas adsorption layer; causing the acid gas to be desorbed from the acid gas adsorption material; removing the acid gas adsorption layer of the acid gas adsorption device, which has been subjected to the step of causing the acid gas to be adsorbed and the step of causing the acid gas to be desorbed, from the surface of the base material; and forming an acid gas adsorption layer including a porous carrier and an acid gas adsorption material on the surface of the base material from which the acid gas adsorption layer has been removed.
[2] In one embodiment, in the method of regenerating an acid gas adsorption device according to the above-mentioned item [1], the acid gas is carbon dioxide.
[3] In one embodiment, in the method of regenerating an acid gas adsorption device according to the above-mentioned item [1] or [2], the base material is a honeycomb-like base material including a partition wall configured to define a plurality of cells, and the acid gas adsorption layer is formed on a surface of the partition wall.
[4] In one embodiment, in the method of regenerating an acid gas adsorption device according to any one of the above-mentioned items [1] to [3], a material for forming the base material includes at least one kind selected from the group consisting of: cordierite; alumina; mullite; silicon carbide; a silicon-silicon carbide-based composite material; and silicon nitride, the porous carrier includes a metal organic framework and/or activated carbon, and the step of removing the acid gas adsorption layer from the surface of the base material includes heating the acid gas adsorption device to burn down the acid gas adsorption layer.
[5] In one embodiment, in the method of regenerating an acid gas adsorption device according to the above-mentioned item [4], the step of removing the acid gas adsorption layer from the surface of the base material includes heating the acid gas adsorption device to 400°C or more.
[6] In one embodiment, in the method of regenerating an acid gas adsorption device according to any one of the above-mentioned items [1] to [3], a material for forming the base material includes at least one kind selected from the group consisting of: alumina; silicon carbide; and a silicon-silicon carbide-based composite material, the porous carrier includes mesoporous silica and/or zeolite, and the step of removing the acid gas adsorption layer from the surface of the base material includes bringing an acidic solution into contact with the acid gas adsorption layer to dissolve the acid gas adsorption layer.
[7] In one embodiment, in the method of regenerating an acid gas adsorption device according to the above-mentioned item [6], the acidic solution includes at least one kind selected from hydrofluoric acid, sulfuric acid, nitric acid, hydrochloric acid, and phosphoric acid.
[8] In one embodiment, in the method of regenerating an acid gas adsorption device according to any one of the above-mentioned items [1] to [3], a material for forming the base material includes silicon carbide and/or a silicon-silicon carbide-based composite material, the porous carrier includes mesoporous alumina, and the step of removing the acid gas adsorption layer from the surface of the base material includes bringing an alkaline solution into contact with the acid gas adsorption layer to dissolve the acid gas adsorption layer.
[9] In one embodiment, in the method of regenerating an acid gas adsorption device according to the above-mentioned item [8], the alkaline solution includes at least one kind selected from sodium hydroxide and potassium hydroxide.
[10] In one embodiment, in the method of regenerating an acid gas adsorption device according to any one of the above-mentioned items [1] to [3], the acid gas adsorption layer includes: particles each including the porous carrier and the acid gas adsorption material; and an organic binder capable of binding the particles, the organic binder is soluble in an aprotic polar solvent and is substantially insoluble in a protic polar solvent, and the step of removing the acid gas adsorption layer from the surface of the base material includes bringing the aprotic polar solvent into contact with the acid gas adsorption layer to dissolve the organic binder.
[11] In one embodiment, in the method of regenerating an acid gas adsorption device according to any one of the above-mentioned items [1] to [10], the step of causing the acid gas to be adsorbed to the acid gas adsorption material includes supplying, as the gas including the acid gas, air to the acid gas adsorption device.
[12] A method of producing an acid gas adsorption device according to another aspect of the present invention includes the steps of: causing an acid gas to be adsorbed to an acid gas adsorption material by supplying a gas including the acid gas to an acid gas adsorption device including a base material, and an acid gas adsorption layer arranged on a surface of the base material, the acid gas adsorption layer including a porous carrier and the acid gas adsorption material, so that the gas is brought into contact with the acid gas adsorption layer; causing the acid gas to be desorbed from the acid gas adsorption material; removing the acid gas adsorption layer of the acid gas adsorption device, which has been subjected to the step of causing the acid gas to be adsorbed and the step of causing the acid gas to be desorbed, from the surface of the base material; and forming an acid gas adsorption layer including a porous carrier and an acid gas adsorption material on the surface of the base material from which the acid gas adsorption layer has been removed.
[13] In one embodiment, in the method of producing an acid gas adsorption device according to the above-mentioned item [12], the acid gas is carbon dioxide.

### Advantageous Effects of Invention

According to the embodiments of the present invention, the method of regenerating an acid gas adsorption device capable of smoothly recovering acid gas capture performance and achieving a reduction in running cost, and the method of producing an acid gas adsorption device capable of producing an acid gas adsorption device having excellent acid gas capture performance can be achieved.

### Brief Description of Drawings

FIG. 1 is a schematic perspective view of a carbon dioxide adsorption device according to one embodiment of the present invention.
FIG. 2 is a schematic sectional view of the carbon dioxide adsorption device of FIG. 1.
FIG. 3 is a schematic perspective view of the carbon dioxide adsorption device of FIG. 1 in a state in which a carbon dioxide adsorption layer is removed therefrom.

### Description of Embodiments

Embodiments of the present invention are described below with reference to the drawings. However, the present invention is not limited to these embodiments.

### A. Overview of Method of Regenerating Acid Gas Adsorption Device

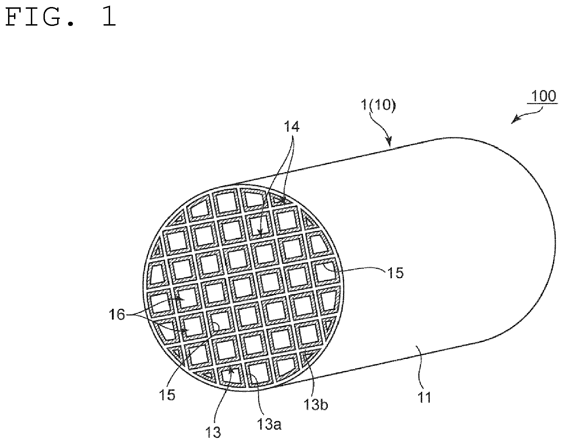

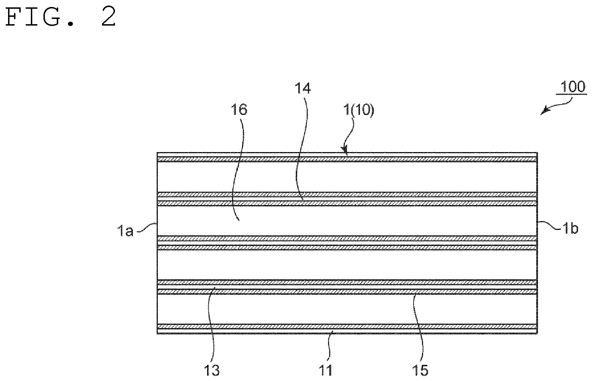

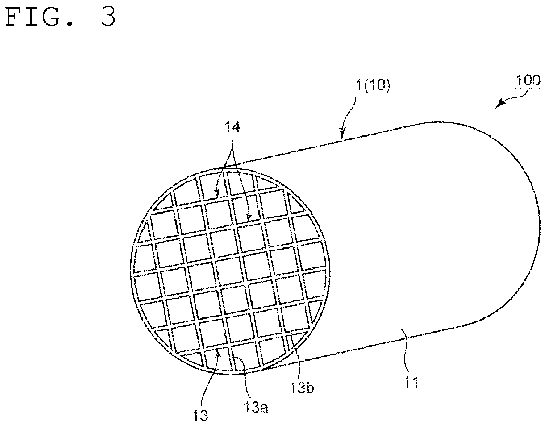

FIG. 1 is a schematic perspective view of a carbon dioxide adsorption device according to one embodiment of the present invention; FIG. **2** is a schematic sectional view of the carbon dioxide adsorption device of FIG. **1****;** and FIG. **3** is a schematic perspective view of the carbon dioxide adsorption device of FIG. **1** in a state in which a carbon dioxide adsorption layer is removed therefrom.

A method of regenerating an acid gas adsorption device according to one embodiment of the present invention includes: a step (adsorption step) of causing an acid gas to be adsorbed to an acid gas adsorption material by supplying a gas including the acid gas to an acid gas adsorption device **100** including a base material **1,** and an acid gas adsorption layer **15** arranged on the surface of the base material **1,** the acid gas adsorption layer **15** including a porous carrier and the acid gas adsorption material, so that the gas is brought into contact with the acid gas adsorption layer **15;** a step (desorption step) of causing the acid gas to be desorbed from the acid gas adsorption material; a step (removal step) of removing the acid gas adsorption layer **15** of the acid gas adsorption device **100,** which has been subjected to the adsorption step and the desorption step, from the surface of the base material **1;** and a step (reformation step) of forming an acid gas adsorption layer **15** including a porous carrier and an acid gas adsorption material on the surface of the base material **1** from which the acid gas adsorption layer **15** has been removed.

The inventors of the present invention have found that the lifetime of the base material is longer than the lifetime of the acid gas adsorption material, and thus completed the present invention. More specifically, after the acid gas adsorption layer of the acid gas adsorption device, which has been subjected to the adsorption step and the desorption step, is removed from the surface of the base material, a new acid gas adsorption layer is formed on the surface of the base material. Thus, the acid gas adsorption device is regenerated. Accordingly, while the base material can be reused, excellent acid gas capture performance can be smoothly recovered. As a result, a reduction in running cost can be achieved.

Examples of the acid gas include carbon dioxide (CO₂), hydrogen sulfide, sulfur dioxide, nitrogen dioxide, and hydrogen chloride.

In one embodiment, the acid gas is carbon dioxide (CO₂) . In this embodiment, the acid gas adsorption device **100** is a carbon dioxide adsorption device **100,** the acid gas adsorption layer **15** is a carbon dioxide adsorption layer **15,** and the acid gas adsorption material is a carbon dioxide adsorption material. The carbon dioxide adsorption device **100** as one embodiment of the acid gas adsorption device is described in detail below.

### B. Carbon Dioxide Adsorption Device

As described above, the carbon dioxide adsorption device **100** includes the base material **1** and the carbon dioxide adsorption layer **15.** The structure of the base material **1** is not particularly limited, and is, for example, a honeycomb-like structure, a filter structure such as a filtration cloth, or a pellet structure. The carbon dioxide adsorption layer **15** is not particularly limited as long as the carbon dioxide adsorption layer is arranged on the surface of any such base material **1.**

### B-1. Base Material (Honeycomb-like Base Material)

In one embodiment, the base material **1** is a honeycomb-like base material **10** including a plurality of cells **14.**

The cells **14** each extend from a first end surface **1a** (inflow end surface) of the honeycomb-like base material **10** to a second end surface **1b** (outflow end surface) thereof in a length direction (axial direction) of the honeycomb-like base material **10** (see FIG. **2**)**.** The cells **14** each have any appropriate shape in a cross section in a direction perpendicular to the length direction of the honeycomb-like base material **10.** The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, a hexagon or a quadrangle is preferred, and a square, a rectangle, or a hexagon is more preferred.

A cell density in a cross section in the direction perpendicular to the length direction of the honeycomb-like base material (specifically, the number of cells 14 per unit area) may be appropriately set depending on the purposes. The cell density may be, for example, from 4 cells/cm² to 320 cells/cm². When the cell density falls within such range, the strength and effective geometric surface area (GSA) of the honeycomb-like base material can be sufficiently ensured.

The honeycomb-like base material 10 has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material 10 of the illustrated example has a cylindrical shape. The outer diameter and length of the honeycomb-like base material may be appropriately set depending on the purposes. Although not shown, the honeycomb-like base material may have a hollow area in a center portion thereof in a cross section in the direction perpendicular to the length direction.

The honeycomb-like base material **10** typically includes: an outer peripheral wall **11;** and a partition wall **13** positioned inside the outer peripheral wall **11.** In the illustrated example, the outer peripheral wall **11** and the partition wall **13** are integrally formed. The outer peripheral wall **11** and the partition wall **13** may be separate bodies.

The outer peripheral wall **11** has a cylindrical shape. The thickness of the outer peripheral wall **11** may be set to any appropriate thickness. The thickness of the outer peripheral wall **11** may be, for example, from 0.1 mm to 10 mm.

The partition wall **13** defines the plurality of cells **14.** More specifically, the partition wall **13** has a first partition wall **13a** and a second partition wall **13b** perpendicular to each other, and the first partition wall **13a** and the second partition wall **13b** define the plurality of cells **14.** The sectional shapes of the cells **14** are each a quadrangle except for a portion in which the first partition wall **13a** and the second partition wall **13b** are each brought into contact with the outer peripheral wall **11.** The configuration of the partition wall is not limited to the partition wall **13** described above. The partition wall may have a first partition wall extending in a radial direction and a second partition wall extending in a circumferential direction, which define a plurality of cells.

The thickness of the partition wall **13** may be appropriately set depending on the applications of the honeycomb-like base material. The thickness of the partition wall **13** is typically smaller than the thickness of the outer peripheral wall **11.** The thickness of the partition wall **13** may be, for example, from 0.03 mm to 0.6 mm. The thickness of the partition wall is measured, for example, through sectional observation with a scanning electron microscope (SEM). When the thickness of the partition wall falls within such range, the honeycomb-like base material can achieve sufficient mechanical strength, and can also achieve a sufficient opening area (total area of the cells in a cross section).

The porosity of the partition wall **13** may be appropriately set depending on the purposes. The porosity of the partition wall **13** is, for example, 15% or more, preferably 20% or more, and is, for example, 70% or less, preferably 45% or less. The porosity may be measured, for example, by mercury porosimetry.

The density of the partition wall **13** may be appropriately set depending on the purposes. The density is, for example, 1.7 g/cm³ or more, preferably 1.8 g/cm³ or more, and is, for example, 2.8 g/cm³ or less, preferably 2.6 g/cm³ or less. The density may be measured, for example, by mercury porosimetry.

A material for forming the partition wall **13** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **10** may be typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material **10** is produced. When the firing is adopted, the body is fired at, for example, 1,200°C to 1,500°C. A firing time period is, for example, 1 hour or more and 20 hours or less.

### B-2. Carbon Dioxide Adsorption Layer

In one embodiment, the carbon dioxide adsorption layer **15** is formed on the surface of the partition wall **13.** In the honeycomb-like base material **10,** a gas flow passage **16** is formed in a portion (typically, a center portion) in a cross section of the cell **14** in which the carbon dioxide adsorption layer **15** is not formed. The carbon dioxide adsorption layer **15** may be formed on the entire inner surface of the partition wall **13** (specifically, so as to surround the gas flow passage **16**) as in the illustrated example, or may be formed on part of the surface of the partition wall. When the carbon dioxide adsorption layer **15** is formed on the entire inner surface of the partition wall **13,** CO₂ removal efficiency can be improved.

The gas flow passage **16** extends from the first end surface **1a** (inflow end surface) to the second end surface **1b** (outflow end surface) as with the cells **14.** Examples of the sectional shape of the gas flow passage **16** include the same sectional shapes as those of the cells **14** described above. Of those, a hexagon or a quadrangle is preferred, and a square, a rectangle, or a hexagon is more preferred. The sectional shapes and sizes of the respective gas flow passages **16** may be all the same, or may be at least partly different.

The carbon dioxide adsorption layer **15** includes a porous carrier and a carbon dioxide adsorption material. In the carbon dioxide adsorption layer **15,** the porous carrier forms mesopores.

Examples of the porous carrier include: metal organic frameworks (MOF), such as MOF-74, MOF-200, and MOF-210; activated carbon; nitrogen-doped carbon; mesoporous silica; mesoporous alumina; zeolite; and a carbon nanotube. Of those, metal organic frameworks (MOF), mesoporous silica, and mesoporous alumina are preferred.

The BET specific surface area of the porous carrier is, for example, 50 m²/g or more, preferably 500 m²/g or more. When the surface area of the porous carrier is equal to or more than the above-mentioned lower limits, the carbon dioxide adsorption material can be sufficiently supported, and an increase in CO₂ absorption rate can be achieved. The upper limit of the BET specific surface area of the porous carrier is typically 2,000 m²/g or less.

The content ratio of the porous carrier in the carbon dioxide adsorption layer **15** is, for example, 0.1 mass% or more, preferably 10 mass% or more, and is, for example, 70 mass% or less, preferably 50 mass% or less.

The thickness of the carbon dioxide adsorption layer **15** is not particularly limited, but is, for example, 10 um or more, preferably 50 um or more, and is, for example, 1,000 um or less, preferably 500 um or less.

The carbon dioxide adsorption material is typically supported by the porous carrier, and is present so as to face the gas flow passage **16.**

Any appropriate compound capable of adsorbing and desorbing CO₂ may be adopted as the carbon dioxide adsorption material. Examples of the carbon dioxide adsorption material include: nitrogen-containing compounds described later; alkali compounds, such as sodium hydroxide and potassium hydroxide; carbonic acid salts, such as calcium carbonate and potassium carbonate; hydrogen carbonate salts, such as calcium hydrogen carbonate and potassium hydrogen carbonate; metal organic flameworks (MOF), such as MOF-74, MOF-200, and MOF-210; zeolite; activated carbon; and nitrogen-doped carbon. A material different from the porous carrier is preferably adopted as the carbon dioxide adsorption material.

Of those carbon dioxide adsorption materials, a nitrogen-containing compound is more preferred. More specific examples of the nitrogen-containing compound include: amine compounds, such as monoethanolamine, diethanolamine, triethanolamine, N-(3-aminopropyl)diethanolamine, aminopropyltrimethoxysilane, polyvinylamine, methyldiethylamine, and tetraethylenepentamine; piperazine compounds such as 1-(2-hydroxyethyl)piperazine; aminosilane coupling agents, such as polyethylenimine-trimethoxysilane, aminopropyltrimethoxysilane, 3-aminopropyltriethoxysilane, and N-(2-aminoethyl)-3-aminopropyl-trimethoxysilane; organic polymers having a primary amino group to a tertiary amino group, such as polyamidoamine, polyethylenimine, and polystyrene to which an amino group is added; organic monomers having a primary amino group to a tertiary amino group, such as ethylenimine and styrene to which an amino group is added; and organic/inorganic compounds to each of which an amino group is added as a substituent. Those carbon dioxide adsorption materials may be used alone or in combination thereof.

The content ratio of the carbon dioxide adsorption material in the carbon dioxide adsorption layer **15** is, for example, 0.1 mass% or more, preferably 0.5 mass% or more. When the content ratio of the carbon dioxide adsorption material is equal to or more than the above-mentioned lower limits, an excellent CO₂ absorption rate can be stably ensured. The upper limit of the content ratio of the carbon dioxide adsorption material is typically 30 mass% or less.

Such carbon dioxide adsorption layer **15** may be typically produced by the following method. First, a dispersion liquid of the above-mentioned porous carrier in which the porous carrier is dispersed in a dispersion medium is prepared, and the carbon dioxide adsorption material is added to the dispersion liquid. Next, the dispersion liquid including the porous carrier and the carbon dioxide adsorption material is applied onto the base material **1** (specifically, the partition wall **13**), and the coating film is then dried, and is sintered as required. Thus, the carbon dioxide adsorption layer **15** is formed. A method of forming the carbon dioxide adsorption layer is described in detail in the description of the reformation step in the section E.

A method of producing the carbon dioxide adsorption layer **15** is not limited to the above-mentioned method. For example, a dispersion liquid of the above-mentioned porous carrier in which the porous carrier is dispersed in a dispersion medium is prepared. The dispersion liquid is applied onto the base material **1** (specifically, the partition wall **13**), and the coating film is then dried, followed by sintering, to thereby form a carrier-containing film. After that, the carbon dioxide adsorption material in a liquid form under normal temperature and normal pressure or a solution of the carbon dioxide adsorption material is applied to the carrier-containing film. Thus, the carbon dioxide adsorption material penetrates into and is supported by the porous carrier of the carrier-containing film. Accordingly, the carbon dioxide adsorption layer **15** is formed.

In another embodiment, the carbon dioxide adsorption layer **15** includes: particles each including the above-mentioned carbon dioxide adsorption material and the above-mentioned porous carrier; and an organic binder. The particles each including the above-mentioned carbon dioxide adsorption material and the above-mentioned porous carrier each have a carbon dioxide adsorption ability, and are hereinafter referred to as "carbon dioxide-adsorbable particles". The organic binder is capable of binding the carbon dioxide-adsorbable particles, and is typically fixed to the base material **1.** The organic binder is soluble in an aprotic polar solvent and is substantially insoluble in a protic polar solvent. That is, the organic binder has resistance to water (water resistance), which is a protic polar solvent. When the organic binder is substantially insoluble in the protic polar solvent and has water resistance, for example, swelling of the organic binder caused by water vapor in the atmosphere can be suppressed. Accordingly, volume expansion and/or a reduction in strength of the organic binder can be suppressed. Besides, a structure in which the organic binder binds and retains the carbon dioxide-adsorbable particles can be prevented from being changed. As a result, an excellent carbon dioxide adsorption ability can be maintained irrespective of the usage environment.

The surface of the carbon dioxide adsorption layer **15** on the opposite side to the partition wall **13** preferably has a three-dimensional network structure or a porous lamellar structure. Accordingly, the acid gas such as carbon dioxide can be efficiently diffused from the surface of the carbon dioxide adsorption layer to an inside thereof. In particular, the organic binder has water resistance, and hence the carbon dioxide adsorption layer can stably maintain such microstructure on the surface thereof that can be brought into contact with the acid gas irrespective of the usage environment.

The carbon dioxide-adsorbable particles are each typically in a solid state under normal temperature and normal pressure (23°C, 0.1 MPa). The carbon dioxide adsorption layer **15** includes a plurality of carbon dioxide-adsorbable particles. The carbon dioxide-adsorbable particles, under a state of being incorporated in the carbon dioxide adsorption layer **15,** may be primary particles, or may be secondary particles in which a plurality of primary particles aggregate.

Of the carbon dioxide adsorption materials in the carbon dioxide-adsorbable particles, the above-mentioned nitrogen-containing compound is preferred, and the above-mentioned organic monomers having a primary amino group to a tertiary amino group, and the above-mentioned organic polymers having a primary amino group to a tertiary amino group are more preferred. The weight average molecular weight M_{w} (in terms of polystyrene) of the organic polymer is, for example, 1,000 or more, preferably 50,000 or more, and is, for example, 1,000,000 or less, preferably 300,000 or less.

In one embodiment, the carbon dioxide adsorption material in each of the carbon dioxide-adsorbable particles is substantially insoluble in the protic polar solvent (typically, water) and the aprotic polar solvent.

The solubility of the carbon dioxide adsorption material in water is, for example, 0.1 g/100 g-H₂O or less, preferably 0.05 g/100 g-H₂O or less. When the solubility of the carbon dioxide adsorption material in water is equal to or less than the above-mentioned upper limits, excellent water resistance can be stably imparted to the carbon dioxide adsorption device. The lower limit of the solubility of the carbon dioxide adsorption material in water is typically 0.01 g/100 g-H₂O or more.

The solubility of the carbon dioxide adsorption material in the aprotic polar solvent is, for example, 1 g/100 g-aprotic polar solvent or less, preferably 0.5 g/100 g-aprotic polar solvent or less. When the solubility of the carbon dioxide adsorption material in the aprotic polar solvent is equal to or less than the above-mentioned upper limits, the dissolution of the carbon dioxide adsorption material in the aprotic polar solvent can be suppressed at the time of the production of the acid gas adsorption device. The lower limit of the solubility of the carbon dioxide adsorption material in the aprotic polar solvent is typically 0.01 g/100 g-aprotic polar solvent or more.

The solubility parameter of the carbon dioxide adsorption material is, for example, 7 or more, preferably 8 or more, and is, for example, 20 or less, preferably 15 or less. The solubility parameter may be calculated, for example, by a Hildebrand method.

Any appropriate organic compound capable of binding the carbon dioxide-adsorbable particles may be adopted as the organic binder. The organic binder is soluble in the aprotic polar solvent, and is substantially insoluble in the protic polar solvent. Examples of the organic binder include: fluoropolymers, such as polyvinylidene fluoride (PVDF), polytetrafluoroethylene (PTFE), a perfluoroalkoxy alkane (PFA), a perfluoroethylene propene copolymer (FEP), and an ethylene tetrafluoroethylene copolymer (ETFE); and amorphous plastics such as polyethersulfone (PES). Those organic binders may be used alone or in combination thereof.

Of those organic binders, organic binders for each of which at least water is a poor solvent (organic binders each substantially insoluble in water) are preferred, fluoropolymers are more preferred, and polyvinylidene fluoride is still more preferred. When the organic binder includes the fluoropolymer (polyvinylidene fluoride), excellent heat resistance and water resistance can be imparted to the carbon dioxide adsorption device.

The solubility of the organic binder in the protic polar solvent (typically, water) is, for example, 0.1 g/100 g-protic polar solvent or less, preferably 0.05 g/100 g-protic polar solvent or less. When the solubility of the organic binder in the protic polar solvent (typically, water) is equal to or less than the above-mentioned upper limits, excellent water resistance can be stably imparted to the acid gas adsorption device. The lower limit of the solubility of the organic binder in the protic polar solvent (typically, water) is typically 0.01 g/100 g-H₂O or more.

The solubility parameter of the organic binder is, for example, 9 or more, preferably 10 or more, and is, for example, 15 or less, preferably 13 or less.

The carbon dioxide adsorption layer 15 may include any appropriate additive in addition to the carbon dioxide-adsorbable particles and the organic binder.

The total content ratio of the carbon dioxide-adsorbable particles and the organic binder in the carbon dioxide adsorption layer **15** is, for example, 30 vol% or more, preferably 50 vol% or more, and is, for example, 100 vol% or less, preferably 99 vol% or less. The volume percentage may be measured, for example, through microstructure observation and elemental analysis.

The content ratio of the carbon dioxide-adsorbable particles in the carbon dioxide adsorption layer **15** is, for example, 5 vol% or more, preferably 30 vol% or more. When the content ratio of the carbon dioxide-adsorbable particles is equal to or more than the above-mentioned lower limits, the carbon dioxide adsorption performance of the carbon dioxide adsorption device can be sufficiently ensured. The upper limit of the content ratio of the carbon dioxide-adsorbable particles is typically 85 vol% or less.

The content ratio of the organic binder in the carbon dioxide adsorption layer **15** is, for example, 5 vol% or more, preferably 15 vol% or more. When the content ratio of the organic binder is equal to or more than the above-mentioned lower limits, the escaping of the carbon dioxide-adsorbable particles from the carbon dioxide adsorption layer can be suppressed in the adsorption step and/or the desorption step described later. The upper limit of the content ratio of the organic binder is typically 70 vol% or less.

The carbon dioxide adsorption layer **15** typically has pores communicating to each other. The porosity of the carbon dioxide adsorption layer **15** is, for example, 10% or more and 90% or less, preferably 10% or more and 60% or less, more preferably 150 or more and 40% or less.

The carbon dioxide adsorption layer **15** including the carbon dioxide-adsorbable particles and the organic binder may be typically produced by the following method. First, a binder solution is prepared by dissolving the above-mentioned organic binder in the aprotic polar solvent, and the above-mentioned carbon dioxide-adsorbable particles are dispersed in the binder solution. After that, the binder solution is applied to the surface of the base material **1** (specifically, the partition wall **13**) to form a precursor film, and the aprotic polar solvent in the precursor film is replaced with a poor solvent for the organic binder. Thus, the carbon dioxide adsorption layer **15** is formed. A method of forming the carbon dioxide adsorption layer is described in detail in the description of the reformation step in the section E.

In addition, a method of producing the carbon dioxide adsorption layer **15** including the carbon dioxide-adsorbable particles and the organic binder is not limited to the above-mentioned method. For example, the carbon dioxide adsorption layer **15** may be formed by dispersing the above-mentioned porous carrier in the above-mentioned binder solution, and applying the binder solution to the surface of the base material **1** (specifically, the partition wall **13**) to form a precursor film, followed by replacing the aprotic polar solvent in the precursor film with a poor solvent for the organic binder to form a carrier-containing film including the porous carrier and the organic binder, and subsequently causing the carbon dioxide adsorption material to be supported by the porous carrier in the carrier-containing film.

### C. Adsorption Step and Desorption Step

As described above, the method of regenerating a carbon dioxide adsorption device according to one embodiment includes: an adsorption step of causing CO₂ to be adsorbed to the carbon dioxide adsorption material in the carbon dioxide adsorption device **100;** and a desorption step of causing CO₂ to be desorbed from the carbon dioxide adsorption material.

In the adsorption step, a gas including CO₂ (CO₂-containing gas) is typically caused to flow through the gas flow passage **16** of the honeycomb-like base material to be brought into contact with the carbon dioxide adsorption layer **15.** In one embodiment, the CO₂-containing gas is air (atmosphere). The concentration of CO₂ in the CO₂-containing gas is, for example, 100 ppm or more and 2 vol% or less. The CO₂-containing gas typically includes nitrogen in addition to CO₂. The temperature of the CO₂-containing gas in the adsorption step is, for example, 0°C or more and 40°C or less. The pressure of the CO₂-containing gas in the adsorption step is, for example, 0.3×10⁵ Pa or more and 2.0×10⁵ Pa or less. The relative humidity RH of the CO₂-containing gas in the adsorption step is, for example, 10%RH or more and 60%RH or less. The operation time period of the adsorption step is, for example, 15 minutes or more and 3 hours or less. The flow rate of the CO₂-containing gas in the adsorption step is, for example, 0.5 m/sec or more and 5 m/sec or less.

Thus, the carbon dioxide adsorption material present so as to face the gas flow passage **16** adsorbs CO₂. The CO₂ capture rate in the adsorption step (=100-(concentration of CO₂ in gas having passed through gas flow passage/concentration of CO₂ in gas before flowing into gas flow passage×100)) is, for example, 80% or more, preferably 85% or more, more preferably 90% or more, and is, for example, 100% or less.

The desorption step (sometimes referred to as "detachment step") is performed after the adsorption step. In the desorption step, typically, the carbon dioxide adsorption device is heated, and CO₂ thus separated is captured through suction with, for example, a pump. Alternatively, CO₂ having been captured is loaded in the carbon dioxide adsorption device again, the carbon dioxide adsorption device is heated, and CO₂ thus separated is captured.

The temperature in the desorption step is, for example, more than 40°C, preferably 70°C or more, and is, for example, 200°C or less, preferably 110°C or less. The operation time period of the desorption step is, for example, 1 minute or more and 1 hour or less.

Thus, CO₂ retained by the carbon dioxide adsorption material is desorbed (released, detached) from the carbon dioxide adsorption material. Accordingly, CO₂ can be captured, and can be utilized in various applications (e.g., methanation).

The adsorption step and the desorption step may be preferably performed repeatedly. In one embodiment, a cycle of the adsorption step and the desorption step may be performed, for example, 10 times or more, preferably 30 times or more, more preferably 50 times or more, still more preferably 100 times or more.

### D. Removal Step

In one embodiment, after the adsorption step and the desorption step are performed (preferably, the cycle of the adsorption step and the desorption step is performed within the above-mentioned ranges), the removal step is performed.

In the removal step, the carbon dioxide adsorption layer **15** of the carbon dioxide adsorption device having been subjected to the adsorption step and the desorption step is removed from the surface of the base material **1** (typically, the partition wall **13**)**.**

Any appropriate method may be adopted as a method of removing the carbon dioxide adsorption layer depending on the material of the base material and the kind of the porous carrier. Examples of the removal method include: a method (burning method) involving heating the carbon dioxide adsorption device to burn down the carbon dioxide adsorption layer; a method (acid dissolution method) involving bringing an acidic solution into contact with the carbon dioxide adsorption layer to dissolve the carbon dioxide adsorption layer; and a method (alkali dissolution method) involving bringing an alkaline solution into contact with the carbon dioxide adsorption layer to dissolve the carbon dioxide adsorption layer. In the removal step, a removal method involving bringing an organic solvent into contact with the carbon dioxide adsorption layer to dissolve only the carbon dioxide adsorption material in the organic solvent is also considered. However, such method cannot sufficiently remove the carbon dioxide adsorption material from the carbon dioxide adsorption layer, and has a risk in that the carbon dioxide adsorption material, which is deteriorated, may remain. Accordingly, when a carbon dioxide adsorption layer is formed again by performing the reformation step after the removal step, the deteriorated carbon dioxide adsorption material may adversely affect the newly formed carbon dioxide adsorption layer. In addition, when the porous carrier is fixed to the base material through drying and/or sintering, the porous carrier cannot be removed with the organic solvent. As a result, when the reformation step is performed after the removal step, the carbon dioxide adsorption layer is formed on the remaining porous carrier, and the gas flow passage may be narrowed. Accordingly, the removal step involving using the organic solvent is unsuitable for the carbon dioxide adsorption device in which the carbon dioxide adsorption layer including the porous carrier and the carbon dioxide adsorption material, the porous carrier being fixed to the base material, is arranged on the base material. Meanwhile, when the carbon dioxide adsorption layer includes the carbon dioxide-adsorbable particles and the organic binder, and the organic binder is fixed to the base material, the carbon dioxide adsorption layer can be removed by bringing an aprotic polar solvent into contact with the carbon dioxide adsorption layer (aprotic polar solvent dissolution method).

### D-1. Burning Method

When a material for forming the base material **1** (the honeycomb-like base material **10**) includes at least one kind selected from the group consisting of: cordierite; alumina; mullite; silicon carbide; a silicon-silicon carbide-based composite material; and silicon nitride, and the porous carrier includes a metal organic framework and/or activated carbon, the burning method is preferably selected in the removal step.

In the burning method, the carbon dioxide adsorption device having been subjected to the adsorption step and the desorption step is heated to burn down the carbon dioxide adsorption layer (the porous carrier and the carbon dioxide adsorption material). A heating temperature is, for example, 400°C or more, preferably 500°C or more, and is, for example, 700°C or less, preferably 650°C or less. A heating time period is not particularly limited as long as the carbon dioxide adsorption layer can be removed, and is, for example, 1 hour or more and 48 hours or less.

### D-2. Acid Dissolution Method

When the material for forming the base material 1 (the honeycomb-like base material **10**) includes at least one kind selected from the group consisting of: alumina; silicon carbide; and a silicon-silicon carbide-based composite material, and the porous carrier includes mesoporous silica and/or zeolite, the acid dissolution method is preferably selected in the removal step.

In the acid dissolution method, the acidic solution is caused to flow through the gas flow passage **16** of the carbon dioxide adsorption device **100** having been subjected to the adsorption step and the desorption step so that the acidic solution is brought into contact with the carbon dioxide adsorption layer **15.** Thus, the carbon dioxide adsorption layer (the porous carrier and the carbon dioxide adsorption material) is dissolved in the acidic solution to be removed.

The acidic solution is typically an aqueous solution of an acid component. The acid dissociation constant pKa of the acid component in water is, for example, -4.0 or more, preferably - 3.7 or more, and is, for example, 3 or less, preferably 2.7 or less. Specific examples of the acid component include hydrofluoric acid, sulfuric acid, nitric acid, hydrochloric acid, and phosphoric acid. The concentration of the acid component in the acidic solution is, for example, 30 mass% or more, preferably 70 mass% or more, and is, for example, 100 mass% or less, preferably 90 mass% or less.

### D-3. Alkali Dissolution Method

When the material for forming the base material 1 (the honeycomb-like base material **10**) includes silicon carbide and/or a silicon-silicon carbide-based composite material, and the porous carrier includes mesoporous alumina, the alkali dissolution method is preferably selected in the removal step.

In the acid dissolution method, the alkaline solution is caused to flow through the gas flow passage **16** of the carbon dioxide adsorption device **100** having been subjected to the adsorption step and the desorption step so that the alkaline solution is brought into contact with the carbon dioxide adsorption layer **15.** Thus, the carbon dioxide adsorption layer (the porous carrier and the carbon dioxide adsorption material) is dissolved in the alkaline solution to be removed.

The alkaline solution is typically an aqueous solution of an alkali component. The basic dissociation constant pKb of the alkali component in water is, for example, 0 or more, preferably 1 or more, and is, for example, 3 or less, preferably 2.5 or less. Specific examples of the alkali component include sodium hydroxide and potassium hydroxide. The concentration of the alkali component in the alkaline solution is, for example, 10 mass% or more, preferably 20 mass% or more, and is, for example, 100 mass% or less, preferably 90 mass% or less.

### D-4. Aprotic Polar Solvent Dissolution Method

When the carbon dioxide adsorption layer includes the carbon dioxide-adsorbable particles and the organic binder, the aprotic polar solvent dissolution method is preferably selected in the removal step.

In the aprotic polar solvent dissolution method, the aprotic polar solvent is caused to flow through the gas flow passage **16** of the carbon dioxide adsorption device **100** having been subjected to the adsorption step and the desorption step so that the aprotic polar solvent is brought into contact with the carbon dioxide adsorption layer **15.** Thus, the organic binder in the carbon dioxide adsorption layer is dissolved in the aprotic polar solvent, and the carbon dioxide-adsorbable particles are separated from the base material. Thus, the carbon dioxide adsorption layer is removed.

The aprotic polar solvent with which the carbon dioxide adsorption layer has been removed includes the carbon dioxide-adsorbable particles and the organic binder. Accordingly, the organic binder may be reused by removing the carbon dioxide-adsorbable particles from the aprotic polar solvent including the carbon dioxide-adsorbable particles and the organic binder through, for example, filtration, followed by adding a protic polar solvent to the aprotic polar solvent including the organic binder, to thereby precipitate only the organic binder.

Any appropriate organic solvent may be adopted as the aprotic polar solvent. Examples of the aprotic polar solvent include N-methyl-2-pyrrolidone (NMP), dimethylformamide (DMF), dimethylacetmide (DMA), dimethylsulfoxide (DMSO), and tetrahydrofuran (THF). Those aprotic polar solvents may be used alone or in combination thereof.

Of those aprotic polar solvents, N-methyl-2-pyrrolidone (NMP) is preferred. When the aprotic polar solvent includes NMP, the organic binder (particularly, PVDF) can be more smoothly dissolved therein, and the carbon dioxide adsorption layer can be smoothly removed with low energy.

As described above, the carbon dioxide adsorption layer (the porous carrier and the carbon dioxide adsorption material) is removed from the surface of the base material 1 (typically, the partition wall **13**) as illustrated in FIG. **3****.** The surface of the base material **1** (typically, the partition wall **13**) is washed as required.

### E. Reformation Step

In one embodiment, the reformation step is performed after the removal step. In the reformation step, a carbon dioxide adsorption layer **15** is newly formed on the surface of the base material **1** (typically, the partition wall **13**) from which the carbon dioxide adsorption layer **15** has been removed.

In the reformation step, for example, first, a dispersion slurry liquid of the above-mentioned porous carrier in which the porous carrier is dispersed in a dispersion medium is prepared. Examples of the dispersion medium include water, alcohols, and diols. Those dispersion media may be used alone or in combination thereof. Of those dispersion media, a water-based solvent (water or a mixed solvent including water) is preferred.

The concentration of the porous carrier in the dispersion slurry liquid is, for example, 10 mass% or more, preferably 15 mass% or more, and is, for example, 50 mass% or less, preferably 30 mass% or less. When the concentration of the porous carrier is adjusted to fall within the above-mentioned ranges, the carbon dioxide adsorption layer can be stably formed on the base material.

Next, the carbon dioxide adsorption material is added to the dispersion slurry liquid. The concentration of the carbon dioxide adsorption material in the dispersion slurry liquid is, for example, 5 mass% or more, preferably 10 mass% or more, and is, for example, 30 mass% or less, preferably 20 mass% or less.

Next, the dispersion slurry liquid including the porous carrier and the carbon dioxide adsorption material is applied onto the base material **1** (specifically, the partition wall **13**) by any appropriate method. In one embodiment, the dispersion liquid is caused to flow through each of the cells **14** of the honeycomb-like base material **10.** Thus, the dispersion liquid can be smoothly applied to the surface of the partition wall. The number of times of the application of the dispersion slurry liquid is appropriately changed depending on the thickness of the carbon dioxide adsorption layer.

Next, the honeycomb-like base material to which the dispersion slurry liquid has been applied is heated at, for example, 50°C to 200°C. Thus, the coating film is dried, and is sintered as required. A drying time period is, for example, 0.5 hour or more and 24 hours or less. When the sintering is adopted, the coating film is sintered at, for example, 80°C to 300°C. A sintering time period is, for example, 1 hour or more and 100 hours or less.

Thus, the carbon dioxide adsorption layer including the porous carrier and the carbon dioxide adsorption material is formed again on the base material 1 (specifically, the partition wall **13**).

In another embodiment, for example, first, the above-mentioned dispersion slurry liquid is applied onto the base material **1** (specifically, the partition wall **13**) in the same manner as described above. Next, the coating film on the base material onto which the dispersion slurry liquid has been applied is dried, and is then heated at, for example, 400°C or more and 800°C or less to be sintered. A sintering time period is, for example, 1 hour or more and 100 hours or less. Thus, a carrier-containing film is formed. Next, the carbon dioxide adsorption material in a liquid form under normal temperature and normal pressure, or a solution of the carbon dioxide adsorption material is applied to the carrier-containing film in the same manner as described above. Thus, the carbon dioxide adsorption material penetrates into and is supported by the porous carrier of the carrier-containing film. The carbon dioxide adsorption layer including the porous carrier and the carbon dioxide adsorption material may also be formed again on the base material **1** (specifically, the partition wall **13**) in this manner.

In still another embodiment, first, a binder solution is prepared by dissolving the above-mentioned organic binder in the above-mentioned aprotic polar solvent. The aprotic polar solvent can dissolve the above-mentioned organic binder therein and cannot dissolve the above-mentioned carbon dioxide-adsorbable particles (more specifically, the carbon dioxide adsorption material) therein.

A solubility parameter distance between the organic binder and the aprotic polar solvent is, for example, 3 or less, preferably 2 or less. When the solubility parameter distance between the organic binder and the aprotic polar solvent is equal to or less than the above-mentioned upper limits, the organic binder can be smoothly dissolved in the aprotic polar solvent. The lower limit of the solubility parameter distance between the organic binder and the aprotic polar solvent is typically 0 or more.

A solubility parameter distance between the carbon dioxide adsorption material and the aprotic polar solvent is, for example, 2 or more, preferably 3 or more, more preferably 4 or more. When the solubility parameter distance between the carbon dioxide adsorption material and the aprotic polar solvent is equal to or more than the above-mentioned lower limits, the dissolution of the carbon dioxide adsorption material in the aprotic polar solvent can be suppressed. The upper limit of the solubility parameter distance between the carbon dioxide adsorption material and the aprotic polar solvent is typically 10 or less.

Next, the above-mentioned carbon dioxide-adsorbable particles are added to be dispersed in the binder solution.

A solution of the organic binder in the aprotic polar solvent in which the carbon dioxide-adsorbable particles are dispersed (particle-dispersed binder solution) is applied to the surface of the base material 1 by any appropriate method in the same manner as described above.

Thus, the particle-dispersed binder solution is applied to the surface of the base material **1** (typically, the surface of the partition wall **13**) to form a precursor film. The precursor film includes the above-mentioned carbon dioxide-adsorbable particles, the above-mentioned organic binder, and the above-mentioned aprotic polar solvent.

Next, the aprotic polar solvent in the precursor film is replaced with a poor solvent for the organic binder.

The poor solvent dissolves the organic binder therein to a smaller extent than the above-mentioned aprotic polar solvent (good solvent), and the organic binder is substantially insoluble in the poor solvent. A solubility parameter distance between the organic binder and the poor solvent is typically larger than the solubility parameter distance between the organic binder and the aprotic polar solvent (good solvent). The solubility parameter distance between the organic binder and the poor solvent is, for example, 2 or more, preferably 3 or more, more preferably 4 or more.

Examples of the poor solvent include: protic polar solvents, such as water and alcohols including ethanol, butanol, and isopropyl alcohol (IPA); and fluorocarbons, such as hydrochlorofluorocarbons (HCFC), hydrofluorocarbons (HFC), and hydrofluoroolefins (HFO). Those poor solvents may be used alone or in combination thereof. Of those poor solvents, water is preferred.

Through replacement of the aprotic polar solvent, a film stable for a protic solvent is obtained.

Thus, the carbon dioxide adsorption layer 15 including the carbon dioxide-adsorbable particles and the organic binder can be formed again on the surface of the base material **1** (typically, the surface of the partition wall **13**). After that, the carbon dioxide adsorption layer **15** is dried as required.

In addition, the reformation step for the carbon dioxide adsorption layer including the carbon dioxide-adsorbable particles and the organic binder is not limited to the above-mentioned embodiment. For example, first, a binder solution is prepared in the same manner as described above. Next, the above-mentioned porous carrier is added to be dispersed in the binder solution.

Thus, the porous carrier is dispersed in the binder solution, and a binder solution in which the porous carrier is dispersed (carrier-dispersed binder solution) is prepared.

Next, the carrier-dispersed binder solution is applied to the surface of the base material **1** by the above-mentioned application method.

Thus, the carrier-dispersed binder solution is applied to the surface of the base material **1** (typically, the surface of the partition wall **13**) to form a precursor film. The precursor film includes the above-mentioned porous carrier, the above-mentioned organic binder, and the above-mentioned aprotic polar solvent.

Next, the aprotic polar solvent in the precursor film is replaced with the above-mentioned poor solvent.

Thus, a carrier-containing film is formed on the surface of the base material **1** (typically, the surface of the partition wall **13**). After that, the carrier-containing film is dried as required. The carrier-containing film includes the above-mentioned porous carrier and the above-mentioned organic binder.

Next, the above-mentioned carbon dioxide adsorption material is supported by the porous carrier in the carrier-containing film. The carbon dioxide adsorption material to be used in this embodiment is preferably in a liquid form under normal temperature and normal pressure. More specifically, the carbon dioxide adsorption material in a liquid form under normal temperature and normal pressure is applied to the carrier-containing film by the above-mentioned application method. Thus, the carbon dioxide adsorption material penetrates into and is supported by the porous carrier of the carrier-containing film. Thus, the carbon dioxide-adsorbable particles each including an acid gas adsorption compound and the porous carrier are formed. That is, the carbon dioxide adsorption layer **15** includes the carbon dioxide-adsorbable particles and the organic binder.

The carbon dioxide adsorption layer **15** including the carbon dioxide-adsorbable particles and the organic binder may also be formed again in this manner.

As described above, the carbon dioxide adsorption device **100** is regenerated. Such method of regenerating a carbon dioxide adsorption device (acid gas adsorption device) is, in other words, a method of producing a carbon dioxide adsorption device (acid gas adsorption device) including a new carbon dioxide adsorption layer (acid gas adsorption layer). The method of producing a carbon dioxide adsorption device (acid gas adsorption device) includes: the above-mentioned adsorption step; the above-mentioned desorption step; the above-mentioned removal step; and the above-mentioned reformation step. A carbon dioxide adsorption device having excellent CO₂ capture performance can be produced by such method of producing a carbon dioxide adsorption device.

### Industrial Applicability

The method of regenerating an acid gas adsorption device according to each of the embodiments of the present invention can be used for regeneration of an acid gas adsorption device to be used for separation and capture of an acid gas, and particularly, can be suitably used for regeneration of a carbon dioxide adsorption device to be used for a Carbon dioxide Capture, Utilization and Storage (CCUS) cycle.

### Reference Signs List

**10** honeycomb-like base material
**13** partition wall
**14** cell
**15** carbon dioxide adsorption layer
**100** carbon dioxide adsorption device

## Claims

1. A method of regenerating an acid gas adsorption device, comprising the steps of:
causing an acid gas to be adsorbed to an acid gas adsorption material by supplying a gas including the acid gas to an acid gas adsorption device including a base material, and an acid gas adsorption layer arranged on a surface of the base material, the acid gas adsorption layer including a porous carrier and the acid gas adsorption material, so that the gas is brought into contact with the acid gas adsorption layer;
causing the acid gas to be desorbed from the acid gas adsorption material;
removing the acid gas adsorption layer of the acid gas adsorption device, which has been subjected to the step of causing the acid gas to be adsorbed and the step of causing the acid gas to be desorbed, from the surface of the base material; and
forming an acid gas adsorption layer including a porous carrier and an acid gas adsorption material on the surface of the base material from which the acid gas adsorption layer has been removed.

2. The method of regenerating an acid gas adsorption device according to claim 1, wherein the acid gas is carbon dioxide.

3. The method of regenerating an acid gas adsorption device according to claim 1 or 2,
wherein the base material is a honeycomb-like base material including a partition wall configured to define a plurality of cells, and
wherein the acid gas adsorption layer is formed on a surface of the partition wall.

4. The method of regenerating an acid gas adsorption device according to claim 1 or 2,
wherein a material for forming the base material includes at least one kind selected from the group consisting of: cordierite; alumina; mullite; silicon carbide; a silicon-silicon carbide-based composite material; and silicon nitride,
wherein the porous carrier includes a metal organic framework and/or activated carbon, and
wherein the step of removing the acid gas adsorption layer from the surface of the base material includes heating the acid gas adsorption device to burn down the acid gas adsorption layer.

5. The method of regenerating an acid gas adsorption device according to claim 4, wherein the step of removing the acid gas adsorption layer from the surface of the base material includes heating the acid gas adsorption device to 400°C or more.

6. The method of regenerating an acid gas adsorption device according to claim 3,
wherein a material for forming the base material includes at least one kind selected from the group consisting of: cordierite; alumina; mullite; silicon carbide; a silicon-silicon carbide-based composite material; and silicon nitride,
wherein the porous carrier includes a metal organic framework and/or activated carbon, and
wherein the step of removing the acid gas adsorption layer from the surface of the base material includes heating the acid gas adsorption device to burn down the acid gas adsorption layer.

7. The method of regenerating an acid gas adsorption device according to claim 1 or 2,
wherein a material for forming the base material includes at least one kind selected from the group consisting of: alumina; silicon carbide; and a silicon-silicon carbide-based composite material,
wherein the porous carrier includes mesoporous silica and/or zeolite, and
wherein the step of removing the acid gas adsorption layer from the surface of the base material includes bringing an acidic solution into contact with the acid gas adsorption layer to dissolve the acid gas adsorption layer.

8. The method of regenerating an acid gas adsorption device according to claim 7, wherein the acidic solution includes at least one kind selected from hydrofluoric acid, sulfuric acid, nitric acid, hydrochloric acid, and phosphoric acid.

9. The method of regenerating an acid gas adsorption device according to claim 3,
wherein a material for forming the base material includes at least one kind selected from the group consisting of: alumina; silicon carbide; and a silicon-silicon carbide-based composite material,
wherein the porous carrier includes mesoporous silica and/or zeolite, and
wherein the step of removing the acid gas adsorption layer from the surface of the base material includes bringing an acidic solution into contact with the acid gas adsorption layer to dissolve the acid gas adsorption layer.

10. The method of regenerating an acid gas adsorption device according to claim 1 or 2,
wherein a material for forming the base material includes silicon carbide and/or a silicon-silicon carbide-based composite material,
wherein the porous carrier includes mesoporous alumina, and
wherein the step of removing the acid gas adsorption layer from the surface of the base material includes bringing an alkaline solution into contact with the acid gas adsorption layer to dissolve the acid gas adsorption layer.

11. The method of regenerating an acid gas adsorption device according to claim 10, wherein the alkaline solution includes at least one kind selected from sodium hydroxide and potassium hydroxide.

12. The method of regenerating an acid gas adsorption device according to claim 3,
wherein a material for forming the base material includes silicon carbide and/or a silicon-silicon carbide-based composite material,
wherein the porous carrier includes mesoporous alumina, and
wherein the step of removing the acid gas adsorption layer from the surface of the base material includes bringing an alkaline solution into contact with the acid gas adsorption layer to dissolve the acid gas adsorption layer.

13. The method of regenerating an acid gas adsorption device according to claim 3,
wherein the acid gas adsorption layer includes: particles each including the porous carrier and the acid gas adsorption material; and an organic binder capable of binding the particles,
wherein the organic binder is soluble in an aprotic polar solvent and is substantially insoluble in a protic polar solvent, and
wherein the step of removing the acid gas adsorption layer from the surface of the base material includes bringing the aprotic polar solvent into contact with the acid gas adsorption layer to dissolve the organic binder.

14. The method of regenerating an acid gas adsorption device according to claim 1 or 2, wherein the step of causing the acid gas to be adsorbed to the acid gas adsorption material includes supplying, as the gas including the acid gas, air to the acid gas adsorption device.

15. The method of regenerating an acid gas adsorption device according to claim 3, wherein the step of causing the acid gas to be adsorbed to the acid gas adsorption material includes supplying, as the gas including the acid gas, air to the acid gas adsorption device.

16. A method of producing an acid gas adsorption device, comprising the steps of:
causing an acid gas to be adsorbed to an acid gas adsorption material by supplying a gas including the acid gas to an acid gas adsorption device including a base material, and an acid gas adsorption layer arranged on a surface of the base material, the acid gas adsorption layer including a porous carrier and the acid gas adsorption material, so that the gas is brought into contact with the acid gas adsorption layer;
causing the acid gas to be desorbed from the acid gas adsorption material;
removing the acid gas adsorption layer of the acid gas adsorption device, which has been subjected to the step of causing the acid gas to be adsorbed and the step of causing the acid gas to be desorbed, from the surface of the base material; and
forming an acid gas adsorption layer including a porous carrier and an acid gas adsorption material on the surface of the base material from which the acid gas adsorption layer has been removed.
